(19) Europäisches Patentamt
European Patent Office
Office européen des brevets

(11) **EP 3 401 666 A1**

(12) **EUROPÄISCHE PATENTANMELDUNG**

(43) Veröffentlichungstag:
**14.11.2018 Patentblatt 2018/46**

(51) Int Cl.:
**G01N 21/25** *(2006.01)* **G01J 3/02** *(2006.01)*
**G01J 3/42** *(2006.01)* **G01N 21/39** *(2006.01)*

(21) Anmeldenummer: **17170667.4**

(22) Anmeldetag: **11.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Mettler-Toledo GmbH**
**8606 Greifensee (CH)**

(72) Erfinder:
• **Venturini, Francesca**
**8600 Dübendorf (CH)**
• **Bergström, Pär**
**8700 Küsnacht (CH)**
• **Hertel, Martin**
**79585 Steinen (DE)**

(74) Vertreter: **Mettler-Toledo**
**IP Department**
**Im Langacher 44**
**8606 Greifensee (CH)**

(54) **GASMESSSYSTEM**

(57) Gasmesssystem, umfassend eine kohärente Lichtquelle (1, 201, 301, 401), welche einen Lichtstrahl aussendet; einen Detektor (8, 208, 308, 408); einen Strahlengang (2, 202, 302), der zwischen der Lichtquelle (1, 201, 301, 401) und dem Detektor (8, 208, 308, 408), ausgebildet ist; und eine Gas-Zelle (4, 204, 304, 404), welche im Strahlengang zwischen der Lichtquelle (1, 201, 301, 401) und dem Detektor (8, 208, 308, 408) angeordnet ist, so dass der Detektor (8, 208, 308, 408) das durch die Gas-Zelle (4, 204, 304, 404) transmittierte Licht empfängt; wobei die Gas-Zelle (4, 204, 304, 404) eine poröse Keramik (11, 211, 311, 411) umfasst; und wobei die Gas-Zelle (4, 204, 304, 404) eine optische Weglänge aufweist, welche ein Vielfaches der tatsächlichen Schichtdicke der Gas-Zelle (4, 204, 304, 404) ist; dadurch gekennzeichnet, dass ferner ein optisches Element (3, 203, 303, 403) im Strahlengang (2, 202, 302) zwischen der Lichtquelle (1, 201, 301, 401) und der Gas-Zelle (4, 204, 304, 404) angeordnet ist; dass der von der Lichtquelle (1, 201, 301, 401) ausgesandte Lichtstrahl beim Eintritt in die Gas-Zelle (4, 204, 304, 404) aufgeweitet und unfokussiert ist.

**Fig. 1**

## Beschreibung

Die Erfindung betrifft ein Gasmesssystem mit einer Gas-Zelle. Das Gasmesssystem dient der absorptions-spektroskopischen Bestimmung mindestens eines chemischen und/oder physikalischen Parameters eines gasförmigen Messmediums.

Die Absorptions-Spektroskopie und insbesondere die sogenannte Diodenlaser-Absorptions-Spektroskopie mittels durchstimmbarem Laser, auch als TDLAS (tunable diode laser absorption spectroscopy) bezeichnet, erlaubt es die spezifische Absorption eines Gases zu untersuchen, wie zum Beispiel Sauerstoff ($O_2$), Kohlendioxid ($CO_2$), Kohlenmonoxid (CO), Stickoxide ($NO_x$), Methan ($CH_4$), Amine, Ammoniak ($NH_3$), Schwefelwasserstoffe ($H_2S$), Schwefeloxide ($SO_2$), Halogenwasserstoffverbindungen, wie HCl oder HF, Wasser bzw. Feuchte ($H_2O$) oder sogar Mischungen daraus, und dadurch dessen Konzentration in einem Messmedium zu bestimmen. Die Einsatzgebiete für beispielsweise Sauerstoff-Messsysteme reichen dabei von einfachen Anwendungen im Bereich Abgasüberwachung bis zu komplexen Prozesssteuerungen in Bereich Chemie und Petrochemie. Weitere beispielhafte Einsatzgebiete umfassen die Steuerung von Verbrennungsprozessen in der Energieerzeugung und Müllverbrennung.

Gemessen wird meist in einer Transmissions-Anordnung, wobei auch Messungen in Transflexions-Anordnung bekannt sind. Die von einer kohärenten Lichtquelle, wie einem Laser oder Diodenlaser ausgesandte Strahlung wird durch das Messmedium gelenkt und nach Interaktion mit demselben von einem geeigneten Detektor detektiert.

Die Nachweisempfindlichkeit solcher Messungen ist gemäss dem Lambert-Beerschen Gesetz von der Absorptionsstrecke abhängig, also der optischen Weglänge des Lichts im zu analysierenden Gas. Wobei zur Bestimmung von kleineren Konzentrationen eine längere Absorptionsstrecke notwendig ist.

Im Falle der TDLAS wird das Messmedium mit der Strahlung eines durchstimmbaren Lasers durchstrahlt. Die Wellenlänge der Strahlung wird dabei in einem vorgegebenen Wellenlängenbereich periodisch variiert, wobei der vom Laser durchlaufene Wellenlängenbereich vorzugsweise eine oder mehrere Absorptionsbanden des zu untersuchenden Gases umfasst. Der abgedeckte Wellenlängenbereich wird durch den verwendeten Laser, genauer den verwendeten Diodenlaser, bestimmt. Es ist eine Vielzahl von Lasern und Diodenlasern bekannt. Sogenannte DFB-Laser (distributed feedback laser) können Wellenlängenbereiche zwischen etwa 700 nm und etwa 3 µm abdecken. Sogenannte VCSEL-Laser (vertical-cavity surface-emitting laser) können Wellenlängenbereiche bis etwa 2.1 µm, QCL-Laser (quantum cascade laser) Wellenlängenbereiche oberhalb von etwa 3.5 µm oder sogar oberhalb von etwa 4.3 µm und ICL-Laser (interband cascade laser) Wellenlängenbereiche von etwa 3 µm bis 6 µm abdecken.

Ein Ansatz zur Verlängerung der optischen Weglänge für die Messung kleiner oder niedriger Konzentrationen stellt die Verwendung von porösen keramischen Materialien als Teil der Gas-Zelle dar, insbesondere von mikro- oder nanoporösen Keramiken. Allerdings konnte bereits gezeigt werden, dass die Verwendung solcher Materialien im Strahlengang aufgrund der Streuung an genau diesem porösen Material zur unerwünschten Interferenzeffekten, sog. Specklebildung auf dem Detektor führt, was in der dynamischen Situation von Wellenlängenscans zu einem sehr stark verrauschten Signal führt.

T. Svensson, et al. Phys. Rev. Lett. 107, 143901 (2011) beschreibt Untersuchungen zur Interaktion von Licht und Gas in stark streuenden nano- und mikro-porösen Materialien, wie insbesondere gesinterte Keramiken mit unterschiedlichen Porengrössen aus Titandioxid ($TiO_2$), Zirkondioxid ($ZrO_2$) oder Aluminiumoxid ($Al_2O_3$). Es konnte gezeigt werden, dass Licht von derartigen porösen Keramiken zufällig - oder mikro-gestreut (eng. random scattering) wird und dadurch die optische Weglänge im Verhältnis zur tatsächlichen Dicke des durchstrahlen keramischen Materials stark verlängert wird. Es wurde zudem gezeigt, dass sich diese Materialien prinzipiell als miniaturisierte Multipass Gas-Zelle für die TDLAS Bestimmung von Sauerstoff bei 760 nm eignen, wobei sich Titandioxid auf Grund einer starken Absorptionsbande bei 760 nm als weniger geeignet herausgestellt hat.

Eine bekannte Limitation der spektroskopischen Untersuchungen an stark streuenden porösen Materialien stellt das optische Interferenzrauschen (eng. optical interference noise) dar, welches zum Beispiel durch Laser Beam Dithering unterdrückt werden kann, welches T. Svensson et al., Opt. Lett. 33 (1), 80 (2008) genauer beschreibt. Dazu kann die Probe rotiert werden und/oder "Tracking Coils" eingesetzt werden, welche eine Linse umfassen die in der Nähe von zwei Spulen angeordnet ist und dadurch eine Anpassung der Linsenposition ermöglichen.

J. Larsson, et al. Appl. Optics 54 (33), 9772 (2015) beschreibt ebenfalls die Verwendung von stark streuenden porösen Keramiken als Multipass-Zelle in einer TDLAS Anordnung, um Sauerstoff in Holz als optisch undurchsichtigem Medium bei 760 nm mittels Wellenlängen-modulierter Spektroskopie zu bestimmen, wobei die Wellenlängen Modulation dazu dient die Sensitivität des Messsystems durch Rausch-Unterdrückung zu verbessern. Es wurde ein Stück des keramischen Materials von etwa 5 mm Dicke in das zu untersuchende Holz eingebracht und das an dem Material gestreute Laserlicht detektiert, welches über eine erste Optische Fiber in das Material eingekoppelt und über eine zweite optische Fiber wieder ausgekoppelt wurde. In diesem Experiment wurden die störenden optischen Interferenzen unterdrückt, indem die optischen Komponenten mittels kleiner Motoren bewegt wurden.

CN 102 621 063 B offenbart ein Gasmesssystem mit einer Gas-Zelle aus porösem Aluminiumoxid, wobei zur Unterdrückung des Interferenzrauschens ein Kollimator zur Optimierung des Laserstrahls, welcher durch eine an die Gas-Zelle angekoppelte Fiber geleitet wird, eingesetzt wird.

CN 202 590 092 A offenbart ein Gasmesssystem mit einem Laser und einer Gas-Zelle mit einem Kern aus porösem Material, wobei der Detektor für das gestreute Laserlicht auf einem dreidimensionalen Verschiebetisch angeordnet ist, so dass der Detektor verschoben werden kann, um die gewünschte optische Weglänge einzustellen bzw. zu erfassen.

Die bekannten Möglichkeiten zur Unterdrückung des Interferenzrauschens sind in kommerziellen Gasmesssystemen in einer Prozessumgebung so nicht umsetzbar, da eine Bewegung der optischen Komponenten des Messsystems mechanisch komplex ist, viel Raum sowie auch eine komplexe elektronische Ansteuerung benötigt, wodurch derartige Gasmesssysteme gross und/oder wartungsanfällig werden.

Aufgabe der Erfindung ist daher die Bereitstellung eines robusten Gasmesssystems mit einer kompakten Gas-Zelle, die eine poröse Keramik umfasst, und ein verbessertes Signal / Rausch-Verhältnis aufweist.

Gelöst wird diese Aufgabe durch ein erfindungsgemässes Gasmesssystem, welches eine kohärente Lichtquelle, die einen Lichtstrahl aussendet, einen Detektor, einen Strahlengang, der zwischen der Lichtquelle und dem Detektor ausgebildet ist, und eine Gas-Zelle, welche zwischen der Lichtquelle und dem Detektor im Strahlengang angeordnet ist, so dass der Detektor das durch die Gas-Zelle transmittierte Licht empfängt. Die Gas-Zelle umfasst ein poröses keramisches Material und weisst eine optische Weglänge auf, welche ein Vielfaches der tatsächlichen Schichtdicke der Gas-Zelle ist. Ferner ist ein optisches Element im Strahlengang zwischen der Lichtquelle und der Gas-Zelle angeordnet und der von der Lichtquelle ausgesandte Lichtstrahl ist beim Eintritt in die Gas-Zelle aufgeweitet und unfokussiert.

Aufgrund der Verwendung einer porösen Keramik in der Gas-Zelle wird das in die Gas-Zelle, genauer in die poröse Keramik, eintretende Licht innerhalb der Keramik mehrfach reflektiert oder zufällig gestreut bevor es die Keramik wieder verlässt, woraus eine optische Weglänge resultiert, welche ein Vielfaches der tatsächlichen Schichtdicke der Gas-Zelle und insbesondere der Schichtdicke der porösen Keramik ist.

Wie bereits eingangs beschrieben, führt die Verwendung derartiger poröser Keramiken zu unerwünschten Interferenzen und Speckle-Bildung. Diese wird in dem erfindungsgemässen Gas-Messsystem unterdrückt, indem der von der Lichtquelle ausgesandte Lichtstrahl beim Eintritt in die Gas-Zelle aufgeweitet und unfokussiert ist, wodurch sich die auftretenden Interferenzen gegenseitig aufheben und aus dem Messsignal ausgemittelt werden können.

Vorzugsweise ist die Phase der von der Lichtquelle ausgesandten Lichtwelle bzw. des Lichtstrahls möglichst durchmischt. Unter der Annahme eines Gauss'schen Strahls, würde dieses bedeuten, dass die Wellenfronten, welche weiter von der Strahltaille entfernt sind stärker gekrümmt sind.

Realisierbar sind optische Weglängen die mindestens 10mal und insbesondere mindestens 50mal grösser bzw. länger sind als die tatsächliche Schichtdicke der Gas-Zelle. Unter optimalen Bedingungen können sogar optische Weglängen realisiert werden, die bis zu mehrere 100mal länger sind als die tatsächliche Schichtdicke. Unter dem Begriff tatsächliche Schichtdicke der Gas-Zelle, wird die Dicke der Gas-Zelle verstanden, welcher der Strecke entspricht, die das Licht ohne zufällige Streuung an der porösen Keramik durch die Gas-Zelle hindurch zurücklegen würde. Die extreme Verlängerung der optischen Weglänge ermöglicht erst den Aufbau eines sehr kleinen, kompakten Gasmesssystems. Eine entsprechend kleine Gas-Zelle hat zudem den Vorteil, dass aufgrund des kleinen Probenvolumens, sehr schnelle Gas-Austauschzeiten realisiert werden können und damit auch schnelle Konzentrationsänderungen im zu untersuchenden Gas verlässlich erfasst und untersucht werden können.

In einer Ausgestaltung des erfindungsgemässen Gasmesssystems ist das optische Element ein optisch transparentes Fenster, insbesondere ein Prozessfenster. Das optisch transparente Fenster dient vor allem dazu die Gas-Zelle von den anderen optischen Bauteilen, wie insbesondere der Lichtquelle und dem Detektor abzutrennen und zu verhindern, dass beispielsweise das zu messende Gas aus der Gas-Zelle hinaus in die anderen Bauteile des Gasmesssystems eindringen kann. Dieses ist insbesondere dann wichtig, wenn zur Aufweitung des Lichtstrahls nur die "natürliche" Divergenz des Lichtstrahls ausgenutzt wird.

In einer weiteren Ausgestaltung verformt das optische Element den Lichtstrahl, wobei das optische Element ein Diffusor, ein diffraktives optisches Element, ein Top Hat oder eine Kollimator-Linse umfasst. Ein derart ausgestaltetes optisches Element wirkt aktiv auf den Lichtstrahl ein und dient dazu, diesen aufzuweiten, so dass ein aufgeweiteter und unfokussierter Lichtstrahl in die Gas-Zelle eintreten kann.

Die Verwendung eines optischen Elements oder der natürlichen Divergenz des Lichtstrahls zur Aufweitung des Lichtstrahls ist besonders vorteilhaft, da auf dieses Weise die Verwendung von mechanisch beweglichen Bauteilen und/oder komplexer elektronischer Ansteuerungen vermieden werden kann, was den Aufbau von kleinen und kompakten Gas-Messsystemen ermöglicht.

In einer weiteren Ausgestaltung kann das optische Element, welches den Lichtstrahl verformt, zudem als Prozessfenster wirken. Diese Ausgestaltung hat insbesondere Vorzüge, wenn das erfindungsgemässe Gasmesssystem besonders klein und kompakt gestaltet ist, da das optische Element sowohl für die Strahlverformung als auch zur Abtrennung der Gas-Zelle dienen kann.

Das Gasmesssystem kann zudem ein weiteres optisches Element umfassen, welches zwischen der Gas-Zelle und dem Detektor im Strahlengang angeordnet ist und ein optisches Fenster oder einen Reflektor umfasst. Je nach Ausgestaltung des Gasmesssystems dient das weitere optische Element dazu den Detektor von der Gas-Zelle räumlich abzutrennen, dieses ist vor allem bei einer Transmissionsanordnung relevant, oder das weitere optische Element wirkt als Reflektor und ermöglicht, dass der Lichtstrahl nach Austritt aus der Gas-Zelle zu dieser zurück reflektiert und erst nach nochmaligen Durchgang durch die Gas-Zelle zum Detektor geleitet wird, was auch als Transflexions-Anordnung bezeichnet wird.

Die kohärente Lichtquelle des Gasmesssystems ist vorzugsweise ein Laser und insbesondere ein durchstimmbarer Laser. Für die Bestimmung von Sauerstoff eignet sich beispielsweise ein Laser, welcher beispielsweise im Bereich von 760 nm emittiert oder variiert werden kann, und für die Bestimmung von $NH_3$ ein Laser, welcher im Bereich um 1500 nm emittiert oder moduliert werden kann, da in diesen Bereichen jeweils eine starke Absorptionsbande von Sauerstoff oder $NH_3$ liegt.

Der Detektor ist als Photodetektor ausgestaltet, beispielsweise als Thermophil-Detektor, Bolometer, Pyroelektrischer Detektor, Photomultiplier, Photodiode oder Photoresistor. Die Wahl des Detektors wird dabei insbesondere von der Wellenlänge der zu detektierenden Strahlung bzw. des zu detektierenden Lichts bestimmt.

In einer weiteren Ausgestaltung weist das erfindungsgemässe Gasmesssystem ferner eine der Gas-Zelle vorgeschaltete Probenaufbereitungs-Einheit auf. Auf diese Weise ist es zum Beispiel möglich störende Verunreinigungen aus dem Messemedium zu entfernen und/oder eine Probe aus einem Behältnis oder einer Prozessumgebung zu entfernen und anschliessend zu messen.

Das Gasmesssystem ist vorzugsweise NeSSI kompatibel. NeSSI steht für New Sampling / Sensor Initiative - eine Initiative der University of Washington, Seattle, welche durch Standardisierung von Dichtungs- und Kopplungssystemen mit zugehörigen Ventilen, Druckreduzierern, Filtern und weiteren Komponenten den modularen Aufbau von Sampling- und/oder Mess-Systemen auf kleinem oder sogar kleinstem Raum ermöglicht.

Die in der Gas-Zelle eingesetzte poröse Keramik ist vorzugweise nano- oder mikro-porös. Die optimale Porengrösse der Keramik muss dabei experimentell ermittelt werden und hängt sowohl von der verwendeten Wellenlänge und damit vom zu untersuchenden Gas, als auch vom eingesetzten Keramik-Material ab.

Die poröse Keramik umfasst vorzugsweise Zirkonoxid, Aluminiumoxid, Titanoxid, Siliziumoxid, Magnesiumoxid, Yttriumoxid, Galliumphosphid, poröses Silizium oder Mischungen daraus.

Je nach Ausgestaltung des Gasmesssystems, kann dieses zur Bestimmung des Gehalts eines oder mehrere der folgenden Gase eingesetzt werden: Sauerstoff (02), Kohlendioxid (CO2), Kohlenmonoxid (CO), Stickoxide (NOx), Methan (CH4), Amine, Ammoniak (NH3), Schwefelwasserstoffe (H2S), Schwefeloxide (SO2), Halogenwasserstoffverbindungen, wie HCl oder HF, Wasser bzw. Feuchte (H2O) oder Mischungen daraus.

Verschiedene Ausführungsformen eines erfindungsgemässen Gasmesssystems werden nachfolgend anhand der Figuren beschrieben. Die Figuren zeigen:

Fig. 1    Schematische Darstellung eines erfindungsgemässen Gasmesssystems in Transmission;

Fig. 2    Schematische Darstellung eines erfindungsgemässen Gasmesssystems in Transflexion;

Fig. 3    Schematische Darstellung des optischen Strahlengangs;

Fig. 4    Explosions-Darstellung eines erfindungsgemässen Gasmesssystems in Transmission, welches NeSSI kompatibel ist;

Fig. 5    Schematische Darstellung des kompakten Gasmesssystems aus Figur 4 im Schnitt;

Fig. 6    Vergleichende Messung der Sauerstoff Absorptionslinie mit einem auf die Gas-Zelle fokussierten bzw. einem aufgeweiteten Lichtstrahl.

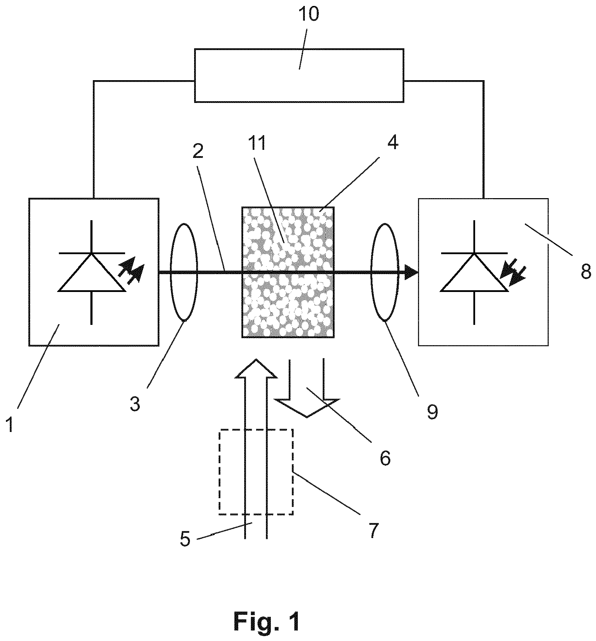

Figur 1 zeigt die schematische Darstellung eines erfindungsgemässen Gasmesssystems in Transmission. Das Gasmesssystem umfasst eine kohärente Lichtquelle 1, welche entlang eines durch einen Pfeil angedeuteten Strahlengangs 2 Licht oder Strahlung aussendet. Als kohärente Lichtquelle können Laser, Diodenlaser und insbesondere durchstimmbare Diodenlaser eingesetzt werden, wobei die Wellenlänge des eingestrahlten Lichts anhand des zu bestimmenden Gases ausgewählt wird. Zur Bestimmung von Sauerstoff kann zum Beispiel insbesondere eine kohärente Lichtquelle 1 mit einer Wellenlänge von 760 nm eingesetzt werden.

Das Licht der Lichtquelle 1 wird durch ein optisches Element 3 in eine Gas-Zelle 4 gelenkt, welche eine poröse Keramik 11 umfasst. Die poröse Keramik 11 ist vorzugsweise eine mikro- oder nanoporöse Keramik 11, welche Zirkonoxid, Aluminiumoxid, Titanoxid, Silikate, Magnesiumoxid, Yttriumoxid, Galliumphosphid, poröses Silizium oder Mischungen daraus umfasst. Die Porengrössen der porösen Keramik 11 werden dabei anhand der eingesetzten Wellenlänge der kohärenten Lichtquelle ausgewählt, und liegen vorzugsweise zwischen 20 nm und 5 $\mu$m. Für Anwendungen mit Wellenlängen im MIR (Mittleren Infrarot) können Keramiken mit Porengrössen von bis zu 10 $\mu$m eingesetzt werdenr. Für die Bestimmung von Sauerstoff bei 760 nm eignet sich insbesondere Zirkondioxid mit einer Porengrösse von ca. 100 nm.

Der auf die Gas-Zelle 4 auftreffende bzw. in die Gas-Zelle 4 einfallende Lichtstrahl ist vorzugsweise unfokussiert und aufgeweitet, so dass die poröse Keramik 11 flächig und nicht nur punktuell, wie bei einem fokussierten Strahl, beleuchtet wird. Experimentell konnte gezeigt werden, dass bei Verwendung einer scheibenförmigen Keramik 11 mit einem Durchmesser von ca. 18 mm ein Strahldurchmesser von etwa 4 mm eine ausreichende Interferenz-Unterdrückung hervorrief.

Die Strahlaufweitung kann bereits durch die "natürliche" Divergenz des aus der Lichtquelle 1 austretenden Lichts über eine gewisse Distanz erreicht werden. In diesem Fall kann das optische Element 3 als optisch durchlässiges Fenster bzw. Prozessfenster ohne spezifische abbildende Eigenschaften ausgebildet sein, und dient somit vor allem dazu die Lichtquelle von der Probe bzw. dem Messmedium abzutrennen. Weiterhin kann das optische Element als Diffusor, diffraktives optisches Element, Top Hat oder Kollimator ausgestaltet sein. Diese Elemente wirken vorzugsweise gleichzeitig als optisch durchlässiges Fenster oder sie können zusammen mit einem zusätzlichen Prozessfenster eingesetzt werden.

Die Gas-Zelle 4 umfasst weiterhin, wie hier angedeutet Anschlüsse 5, 6 zum einleiten bzw. ausleiten einer zu untersuchende gasförmigen Probe. Bei der Probe kann es sich zum Beispiel um ein gasförmiges Messmedium handeln, wie auch um eine vom Messmedium abgetrennte Probe handeln. Die gasförmige Probe kann direkt oder über ein hier angedeutetes Probenentnahme- oder Probenvorbereitungs-System 7 in die Gas-Zelle 4 eingebracht werden. Es sind unterschiedliche Probenentnahme- oder Probenvorbereitungs-Systeme bekannt, mit denen eine gasförmige Probe aus einem Messmedium oder einer Prozessumgebung entnommen und und je nach Ausgestaltung auch aufbereitet werden kann.

Das Licht interagiert in der Gas-Zelle 4 mit einer darin befindlichen Probe und wird nach Austritt aus der Gas-Zelle 4 auf einen geeigneten Detektor 8 gelenkt. Dazu kann wie hier beispielhaft gezeigt ein weiteres optisches Element 9 im Strahlengang zwischen Gas-Zelle 4 und Detektor 8 angeordnet sein. In einem Gasmesssystem in Transmission kann als weiteres optisches Element 9 beispielsweise eine Sammeloptik eingesetzt werden, welche das aus der Gas-Zelle 4 austretende Licht auf den Detektor 8 fokussiert. In einem besonders kompakten Gasmesssystem kann das weitere optische Element zudem als Prozessfenster dienen und so die Probe physisch vom Detektor 8 trennen. Der Detektor 8 wie auch die kohärente Lichtquelle 1 sind mit einer geeigneten Steuer- und/oder Regeleinheit 10 verbunden, welche auch eine Auswertungseinheit umfassen kann.

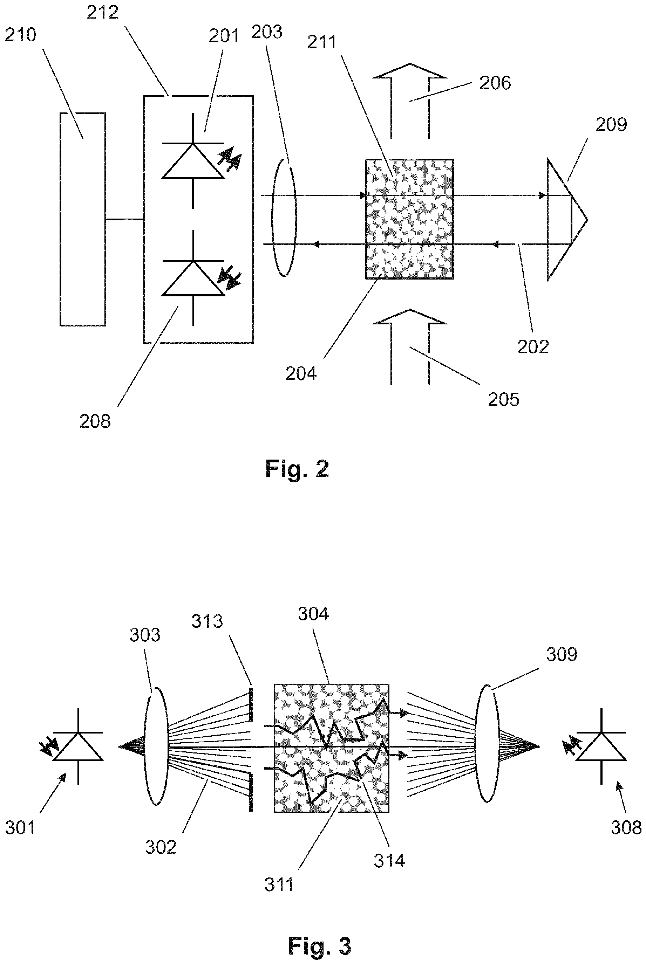

Figur 2 zeigt schematisch ein erfindungsgemässes Gasmesssystem in Transflexion, bei dem die kohärente Lichtquelle 201 und der Detektor 208 in einem gemeinsamen Gehäuse 212 angeordnet und mit einer geeigneten Steuer- und/oder Regeleinheit 210 verbunden sind. Ein von der Lichtquelle 201 ausgesandter Lichtstrahl, dessen Strahlengang 202 hier durch Pfeile angedeutet ist, wird durch ein optisches Element 203, welches vorzugsweise gleichzeitig als Prozessfenster dient, in eine Gas-Zelle 204 gelenkt, welche eine poröse Keramik 211 umfasst. Das zu untersuchende Gas kann durch geeignete Ein- und Auslässe 205, 206 in die Gas-Zelle 204 eingebracht und wieder ausgetragen werden. In der hier beispielhaft gezeigten Ausführung wird die Gas-Probe durch die Gas-Zelle 204 hindurch geleitet. Nach Durchtritt durch die Keramik 211 bzw. die Gas-Zelle 204 wird das austretende Licht durch ein weiteres optisches Element 209, welches hier als Reflektor ausgestaltet ist, wieder durch die Gas-Zelle 205 und das optische Element 203 zurückgelenkt.

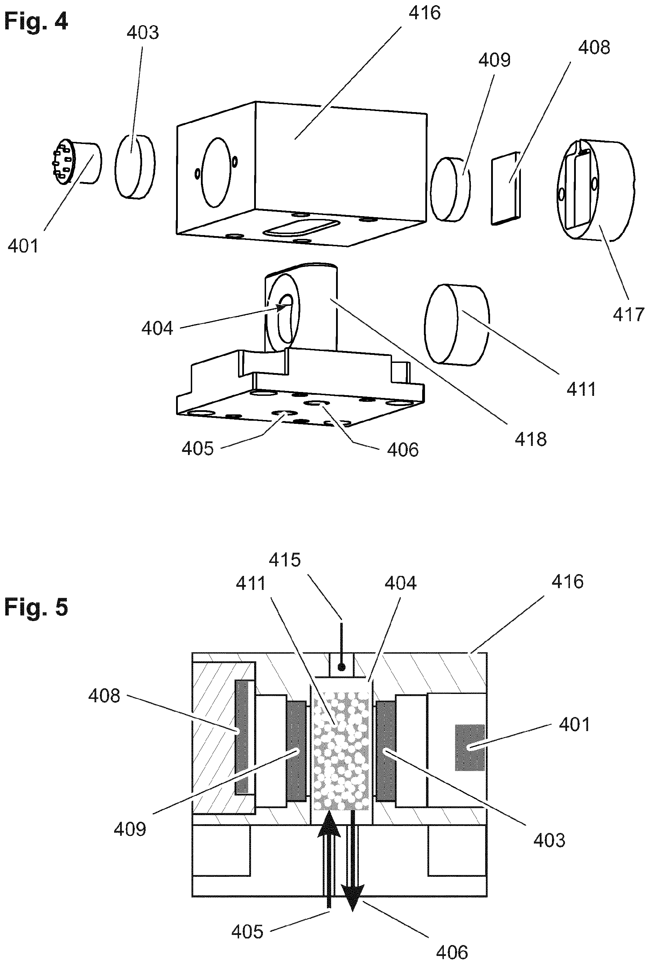

Figur 3 zeigt beispielhaft und schematisch den optischen Strahlengang eines erfindungsgemässen Gasmesssystems, zur besseren Übersicht ist nur der Strahlengang in Transmission dargestellt. Von einer kohärenten Lichtquelle 301 wird ein Lichtstrahl 302 ausgesendet, welcher durch ein optisches Element 303, eine Gas-Zelle und ein weiteres optisches Element 309 auf einen Detektor 308 gelenkt wird. Der ausgesandte Lichtstrahl 302 weitet sich bis zum Auftreffen auf die Gas-Zelle 304, genauer die darin enthaltene poröse Keramik 311, auf, so dass diese mit diffusen Laserlicht beleuchtet wird. Es konnte experimentell gezeigt werden, dass durch die Aufweitung des Licht- bzw. Laserstrahls die störenden Interferenzen, insbesondere die Speckle-Bildung stark unterdrückt und das Signal-Rausch-Verhältnis deutlich verbessert werden konnte, wie es in Figur 5 beispielhaft für die Messung einer Sauerstoff-Absorptionslinie gezeigt ist.

Das Gasmesssystem kann zudem, wie hier gezeigt, eine Blende 313 aufweisen, welche im Strahlengang 302 zwischen dem optischen Element 303 und der Gas-Zelle 304 angeordnet ist. Wird eine Iris-Blende eingesetzt, so ist es zudem möglich den Durchmesser des Lichtstrahls zu verändern und so die Intensität des in die Gas-Zelle 304 eintretenden Lichts zu verändern.

Die poröse Keramik 311 weist eine tatsächliche Schichtdicke von ca. 5 mm bis 10 mm auf, jedoch wird durch diffuse Reflektion an den in der Keramik vorliegenden Nano- oder Mikropartikeln der effektive optische Weg 314, den das Licht zurücklegt, um ein Vielfaches verlängert, wie es durch die Pfeile angedeutet wird. Die optische Weglänge der Gas-Zelle 304 ist somit um ein Vielfaches länger als deren tatsächliche Schichtdicke.

Das aus der Gas-Zelle austretende Licht wird durch das weitere optische Element 309 auf den Detektor 8 gelenkt. Die Ausgestaltung des weiteren optischen Elements 309 wurde im Zusammenhang mit Figur 1 für eine Transmissions-Anordnung und im Zusammenhang mit Figur 2 für eine Transflektions-Anordnung beschrieben.

Als optisches Element 3, 203, 303 und Gas-Zelle 4, 304, 404 können die bereits im Zusammenhang mit den Figuren 1 und 2 beschriebenen Varianten eingesetzt werden. Weiterhin kann der Lichtstrahl entlang des Strahlengangs 2, 202, 302 zwischen Lichtquelle 1, 201, 301 und Gas-Zelle 4, 204, 304 und/oder zwischen Gas-Zelle 4, 204, 34 und Detektor 8, 208, 308 ganz oder teilweise in Lichtleitern geführt werden.

Die Figur 4 und 5 zeigen ein erfindungsgemässes Gasmesssystems im Schnitt, welches NeSSI kompatibel ist. Figur 4 zeigt das erfindungsgemässe Gasmesssystems im Schnitt und Figur 5 als dreidimensionale Darstellung.

Licht von einer kohärenten Lichtquelle 401, wie zum Beispiel einem VCSEL Laser, wird durch ein optisches Element 403, welches hier sowohl als Prozessfenster als auch zur Aufweitung des Lichtstrahls dient, durch eine Gas-Zelle 404 mit einer porösen Keramik 411 gelenkt, wobei die poröse Keramik 411 mit einem aufgeweiteten Lichtstrahl beleuchtet wird. Die Gas-Zelle 404 weist zudem Gas-Anschlüsse 405, 406 auf, durch welche ein zu untersuchendes Gas in die Gas-Zelle 404 eingebracht bzw. wieder ausgetragen werden kann. Das zu untersuchende Gas kann direkt in die Gas-Zelle 404 eingeleitet werde oder wie bereits in Fig. 1 gezeigt zuvor durch ein Probenahmes-System 7 geleitet werden. Weiterhin weisst das Gasmesssystem mindestens einen Messfühler 415 auf, mit welchem beispielweise die Temperatur und/oder der Druck in der Gas-Zelle 404 ermittelt werden kann. Nach Transmission durch die Gas-Zelle 404 und insbesondere die poröse Keramik 411 wird das Licht bzw. der Lichtstrahl durch ein weiteres optisches Element 409, welches hier auch als Prozessfenster dient, auf einen Detektor 408 gelenkt. Der Detektor 408 ist beispielweise als Photodetektor ausgestaltet.

Das in den Figuren 4 und 5 als Explosionsdarstellung und im Schnitt gezeigte Gasmesssystem ist besonders klein und kompakt gestaltet, wobei im zusammengebauten Zustand alle optischen Bauteile in einem Gehäuseblock 416 angeordnet sind. Die Gas-Zelle 404 mit der porösen Keramik 411 ist vorzugsweise so gestaltet, dass insbesondere die Keramik 411 einfach ausgetauscht werden kann, wenn diese zum Beispiel verunreinigt ist. Die Gas-Zelle weist zudem Ein/Auslässe 405, 406 für das zu analysierende Gas auf. Dazu wird die poröse Keramik 411 als Scheibe in einem geeigneten Rahmen 418 befestigt, wie er zum Beispiel auch für die Befestigung von Linsen oder optischen Filtern bekannt ist. Ebenso kann die kohärente Lichtquelle 401 und/oder der Detektor 408, welcher in einer Halterung 417 angeordnet ist, ausgetauscht werden, dieses ist besonders vorteilhaft, da so mit demselben Aufbau unterschiedliche Gase bei unterschiedlichen Wellenlängen vermessen werden können.

Vorzugsweise ist das erfindungsgemässe Gasmesssystem NeSSI kompatibel. Ein Prototyp, wie in den Figuren 4 und 5 gezeigt, konnte beispielsweise als kompakter Würfel mit einer Seitenlänge von weniger als 5 cm realisiert werden. Die porösen Keramik 411 wurde dabei als Scheibe aus Zirkonoxid mit einem Durchmesser von ca. 16 mm, einer Schichtdicke von etwa 6.4 mm und einer Porengrösse von ca. 100 nm ausgestaltet, wodurch eine optischen Weglänge von bis zu etwa 5 m realisiert werden konnte. Dieses entspricht einer nahezu 800fachen Vergrösserung bzw. Verlängerung der tatsächlichen Schichtdicke der Gas-Zelle entspricht. Das geringe Volumen der Gas-Zelle 404, welches insbesondere durch die Dimensionen der porösen Keramik 411 gegeben ist, hat zudem den Vorteil, dass ein sehr schneller Gas-Austausch in der Gas-Zelle 404 realisiert werden kann und dadurch auch schnelle Konzentrationswechsel im Messmedium bzw. dem zu untersuchenden Gas erfasst werden können.

NeSSI steht für New Sampling / Sensor Initiative - eine Initiative der University of Washington, Seattle, welche durch Standardisierung von Dichtungs- und Kopplungssystemen mit zugehörigen Ventilen, Druckreduzierern, Filtern und weiteren Komponenten den modularen Aufbau von Sampling-Systemen und/oder Mess-Systemen auf kleinem Raum ermöglicht.

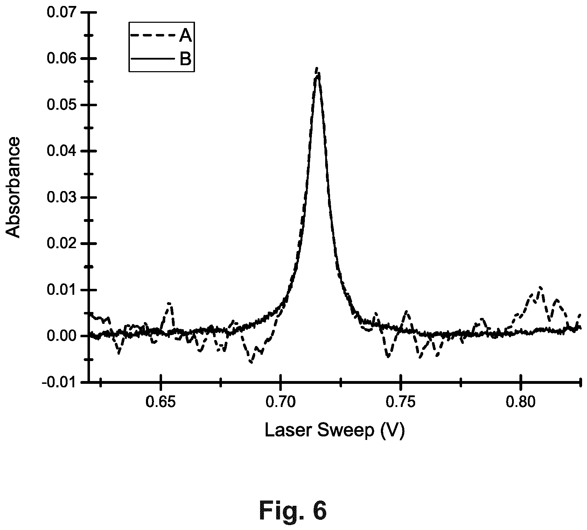

Figur 6 zeigt im Vergleich eine Messung der Sauerstoff Absorptionslinie mit einem auf die Gas-Zelle fokussierten (Linie A) bzw. einem erfindungsgemäss aufgeweiteten (B) Lichtstrahl (Linie B). Als kohärente Lichtquelle wurde ein VCSEL Laser mit einer Wellenlänge von 760 nm, als Detektor ein Photodetektor und als poröse Keramik eine Zirkondioxid-Scheibe mit einer Schichtdicke von etwa 6.4 mm verwendet. Die optische Weglänge durch die poröse Keramik hindurch wurde durch Kalibration in Luft als ca. 5 m ermittelt und beträgt somit ein nahezu 800faches der effektiven Schichtdicke. Die Porengrösse der verwendeten Zirkondioxid-Keramik lag bei ca. 100 nm. Die Messung A erfolgte mit einem Laserstrahl, welcher auf ca. 70 Mikron fokussiert wurde, und Messung B mit einem Laserstrahl, welcher auf ca. 4.1 mm Durchmesser aufgeweitet wurde. Dadurch wurde es möglich die Interferenzen, insbesondere die Specklebildung stark zu unterdrücken, was sich in einem deutlich verbesserten Signal-Rausch-Verhältnis der mit aufgeweitetem Lichtstrahl aufgenommene Absorptionsline B zeigt. Es konnte zudem ein Speckle-Unterdrückungsfaktor, welcher das Verhältnis des Rauschens mit und ohne Speckle-Unterdrückung definiert von $\frac{\sigma_A}{\sigma_B} = 7.9$ ermittelt werden.

Diese deutliche Verbesserung des Signal-Rausch-Verhältnisses wird im erfindungsgemässen Gasmesssystem durch eine rein optische Lösung bzw. passive Lösung erzielt, welche weder bewegliche Elemente noch eine zusätzliche Elektroniksteuerung benötigt. Das erfindungsgemässe Gasmesssystem ist daher extrem robust und kann auch klein und kompakt realisiert werden.

**Liste der Bezugszeichen**

| | |
|---|---|
| 1, 201, 301, 401 | Lichtquelle |
| 2, 202, 302 | Strahlengang |

| 3, 203, 303, 403 | Optisches Element |
|---|---|
| 4, 204, 304, 404 | Gas-Zelle |
| 5, 205, 405, | Anschluss |
| 6, 206, 406 | Anschluss |
| 7 | Probenentnahme- oder Probenvorbereitungs-System |
| 8, 208, 308, 408 | Detektor |
| 9, 209, 309, 409 | Weiteres optisches Element |
| 10, 210, | Steuer- und/oder Regeleinheit |
| 11, 211, 311, 411 | Poröse Keramik |
| 212 | Gehäuse |
| 313 | Blende |
| 314 | Optischer Weg |
| 415 | Messfühler |
| 416 | Gehäuseblock |
| 417 | Halterung |
| 418 | Rahmen |

**Patentansprüche**

1. Gasmesssystem, umfassend
   eine kohärente Lichtquelle (1, 201, 301, 401), welche einen Lichtstrahl aussendet;
   einen Detektor (8, 208, 308, 408);
   einen Strahlengang (2, 202, 302), der zwischen der Lichtquelle (1, 201, 301, 401) und dem Detektor (8, 208, 308, 408), ausgebildet ist; und
   eine Gas-Zelle (4, 204, 304, 404), welche im Strahlengang zwischen der Lichtquelle (1, 201, 301, 401) und dem Detektor (8, 208, 308, 408) angeordnet ist, so dass der Detektor (8, 208, 308, 408) das durch die Gas-Zelle (4, 204, 304, 404) transmittierte Licht empfängt; wobei die Gas-Zelle (4, 204, 304, 404) eine poröse Keramik (11, 211, 311, 411) umfasst; und wobei die Gas-Zelle (4, 204, 304, 404) eine optische Weglänge aufweist, welche ein Vielfaches der tatsächlichen Schichtdicke der Gas-Zelle (4, 204, 304, 404) ist;
   **dadurch gekennzeichnet, dass** ferner ein optisches Element (3, 203, 303, 403) im Strahlengang (2, 202, 302) zwischen der Lichtquelle (1, 201, 301, 401) und der Gas-Zelle (4, 204, 304, 404) angeordnet ist; und dass der von der Lichtquelle (1, 201, 301, 401) ausgesandte Lichtstrahl beim Eintritt in die Gas-Zelle (4, 204, 304, 404) aufgeweitet und unfokussiert ist.

2. Gasmesssystem gemäss Anspruch 1, **dadurch gekennzeichnet, dass** die optische Weglängen mindestens 10 mal, insbesondere mindestens 50 mal und vorzugweise mehrere 100mal, länger ist als die tatsächliche Schichtdicke der Gas-Zelle (4, 204, 304, 404).

3. Gasmesssystem gemäss Anspruch 1, **dadurch gekennzeichnet, dass** die Gas-Zelle und/oder die poröse Keramik austauschbar sind.

4. Gasmesssystem gemäss Anspruch 1 oder 2, **dadurch gekennzeichnet, dass** das optische Element (3, 203, 303, 403) ein optisch transparentes Fenster, insbesondere ein Prozessfenster ist, und das die Aufweitung des Lichtstrahls auf Grund der Divergenz desselben erfolgt.

5. Gasmesssystem gemäss Anspruch 1 oder 2, **dadurch gekennzeichnet, dass** das optische Element (3, 203, 303, 403) den Lichtstrahl verformt, wobei das optische Element (3, 203, 303, 403) ein Diffusor-, ein diffraktives optisches Element, ein Top Hat oder eine Kollimator-Linse umfasst.

6. Gasmesssystem gemäss Anspruch 5, **dadurch gekennzeichnet, dass** das optische Element (3, 203, 303, 403), welches den Lichtstrahl verformt, zudem als Prozessfenster wirkt.

7. Gasmesssystem gemäss einem der Ansprüche 1 bis 6, **dadurch gekennzeichnet, dass** dieses ein weiteres optisches Element (9, 209, 309, 409) umfasst, welches zwischen der Gas-Zelle (4, 204, 304, 404) und dem Detektor (8, 208, 308, 408) im Strahlengang (2, 202, 302) angeordnet ist und ein optisches Fenster oder einen Reflektor umfasst.

**8.** Gasmesssystem gemäss einem der Ansprüche 1 bis 7, **dadurch gekennzeichnet, dass** die kohärente Lichtquelle (1, 201, 301, 401) ein Laser, insbesondere ein durchstimmbarer Laser, ist.

**9.** Gasmesssystem gemäss einem der Ansprüche 1 bis 8, **dadurch gekennzeichnet, dass** der Detektor (8, 208, 308, 408) ein Photodetektor ist, insbesondere ein Thermophil-Detektor, ein Bolometer, ein Pyroelektrischer Detektor, ein Photomultiplier, eine Photodiode oder ein Photoresistor.

**10.** Gasmesssystem gemäss einem der Ansprüche 1 bis 9, **dadurch gekennzeichnet, dass** dieses ferner eine der Gas-Zelle (4, 204, 304, 404) vorgeschaltete Probenaufbereitungs-Einheit (7) umfasst.

**11.** Gasmesssystem gemäss einem der Ansprüche 1 bis 10, **dadurch gekennzeichnet, dass** dieses NeSSI kompatibel ist.

**12.** Gasmesssystem nach einem der Ansprüche 1 bis 11, **dadurch gekennzeichnet, dass** die poröse Keramik (11, 211, 311, 411) nano- oder mikro-porös ist.

**13.** Gasmesssystem nach einem der Ansprüche 1 bis 12, **dadurch gekennzeichnet, dass** die poröse Keramik (11, 211, 311, 411) Zirkonoxid, Aluminiumoxid, Titanoxid, Siliziumoxid, Magnesiumoxid, Yttriumoxid, Galliumphosphid, poröses Silizium oder Mischungen daraus umfasst.

**14.** Verwendung eines Gasmesssystem gemäss einem der vorangehenden Ansprüche zur Bestimmung des Gehalts eines oder mehrere der folgenden Gase: Sauerstoff (02), Kohlendioxid ($CO_2$), Kohlenmonoxid (CO), Stickoxide ($NO_x$), Methan ($CH_4$), Amine, Ammoniak ($NH_3$), Schwefelwasserstoffe ($H_2S$), Schwefeloxide ($SO_2$), Halogenwasserstoffverbindungen, wie HCl oder HF, Wasser bzw. Feuchte ($H_2O$) oder Mischungen daraus.

**Fig. 1**

**Fig. 2**

**Fig. 3**

# Fig. 4

# Fig. 5

Fig. 6

Europäisches Patentamt
European Patent Office
Office européen des brevets

**EUROPÄISCHER RECHERCHENBERICHT**

Nummer der Anmeldung

EP 17 17 0667

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | CN 102 621 063 B (HARBIN INST OF TECHNOLOGY) 13. November 2013 (2013-11-13) * Abbildungen 1-3 * ----- | 1-6,8-14 | INV. G01N21/25 G01J3/02 G01J3/42 G01N21/39 |
| X | VENTURINI F ET AL: "Characterization of strongly scattering nanoporous materials as miniaturized multipass cell for tunable diode laser absorption spectroscopy", APPLIED PHYSICS B: LASERS AND OPTICS, SPRINGER INTERNATIONAL, BERLIN, DE, Bd. 123, Nr. 4, 10. April 2017 (2017-04-10), Seiten 1-8, XP036208542, ISSN: 0946-2171, DOI: 10.1007/S00340-017-6705-Z [gefunden am 2017-04-10] * Abbildungen 2, 4-5 * ----- | 1-6,8,9, 11-14 | |
| A,D | CN 102 590 092 A (HARBIN INST OF TECHNOLOGY) 18. Juli 2012 (2012-07-18) * Abbildung 1 * ----- | 1-14 | |
| A | JP 2014 169912 A (HINO MOTORS LTD) 18. September 2014 (2014-09-18) * [0041]; Abbildungen 4-6 * ----- | 1-14 | RECHERCHIERTE SACHGEBIETE (IPC) G01N G01J |
| A | US 2007/134748 A1 (KUDO JUN [JP] ET AL) 14. Juni 2007 (2007-06-14) * Abbildung 6 * ----- -/-- | 1-14 | |

Der vorliegende Recherchenbericht wurde für alle Patentansprüche erstellt

| Recherchenort | Abschlußdatum der Recherche | Prüfer |
|---|---|---|
| München | 8. November 2017 | Mason, William |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 1 von 2

**Europäisches Patentamt**
**European Patent Office**
**Office européen des brevets**

# EUROPÄISCHER RECHERCHENBERICHT

**Nummer der Anmeldung**

EP 17 17 0667

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HARTMANN J-M ET AL: "Infrared absorption by molecular gases to probe porous materials and comparisons with other techniques", MICROPOROUS AND MESOPOROUS MATERIALS, ELSEVIER, AMSTERDAM, NL, Bd. 237, 13. September 2016 (2016-09-13), Seiten 31-37, XP029777563, ISSN: 1387-1811, DOI: 10.1016/J.MICROMESO.2016.09.014 * Abbildung 1 * | 1-14 | |
| A | SOMESFALEAN G ET AL: "Concentration measurement of gas embedded in scattering media by employing absorption and time-resolved laser spectroscopy", APPLIED OPTICS, OPTICAL SOCIETY OF AMERICA, WASHINGTON, DC; US, Bd. 41, Nr. 18, 20. Juni 2002 (2002-06-20) , Seiten 3538-3544, XP002431713, ISSN: 0003-6935, DOI: 10.1364/AO.41.003538 * Abbildung 1 * | 1-14 | |
| A | RIZZUTI L ET AL: "The measurement of light transmission through an irradiated fluidised bed", CHEMICAL ENGINEERING SCIENCE, OXFORD, GB, Bd. 38, Nr. 8, 1. Januar 1983 (1983-01-01) , Seiten 1241-1249, XP002592545, ISSN: 0009-2509 * Abbildung 1 * | 1-14 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 8. November 2017 | Mason, William |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 17 17 0667

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2017

| Im Recherchenbericht angeführtes Patentdokument | Datum der Veröffentlichung | Mitglied(er) der Patentfamilie | Datum der Veröffentlichung |
|---|---|---|---|
| CN 102621063 B | 13-11-2013 | KEINE | |
| CN 102590092 A | 18-07-2012 | KEINE | |
| JP 2014169912 A | 18-09-2014 | JP 6169374 B2<br>JP 2014169912 A | 26-07-2017<br>18-09-2014 |
| US 2007134748 A1 | 14-06-2007 | JP 4231869 B2<br>JP 2007163163 A<br>US 2007134748 A1 | 04-03-2009<br>28-06-2007<br>14-06-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 102621063 B

- CN 202590092 A

**In der Beschreibung aufgeführte Nicht-Patentliteratur**

- **T. SVENSSON et al.** *Phys. Rev. Lett.,* 2011, vol. 107, 143901
- **T. SVENSSON et al.** *Opt. Lett.,* 2008, vol. 33 (1), 80

- **J. LARSSON et al.** *Appl. Optics,* 2015, vol. 54 (33), 9772